## Europäisches Patentamt
## European Patent Office
## Office européen des brevets

(19)

(11) Veröffentlichungsnummer: **0 230 592**
**B1**

(12)

# EUROPÄISCHE PATENTSCHRIFT

(45) Veröffentlichungstag der Patentschrift:
**16.08.89**

(51) Int. Cl.⁴: **A01D 34/86**, A01D 34/00

(21) Anmeldenummer: **86117287.2**

(22) Anmeldetag: **11.12.86**

(54) **Randstreifenmäher.**

(30) Priorität: **21.12.85 DE 3545712**

(43) Veröffentlichungstag der Anmeldung:
**05.08.87 Patentblatt 87/32**

(45) Bekanntmachung des Hinweises auf die Patenterteilung:
**16.08.89 Patentblatt 89/33**

(84) Benannte Vertragsstaaten:
**AT BE CH DE ES FR GB GR IT LI LU NL SE**

(56) Entgegenhaltungen:
**AT-B- 346 636**
**DE-A- 3 116 984**

(73) Patentinhaber: **Doppstadt, Werner, Vossnacker Strasse 67, D-5620 Velbert 11 - Langenberg(DE)**

(72) Erfinder: **Doppstadt, Werner, Vossnacker Strasse 67, D-5620 Velbert 11 - Langenberg(DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg(DE)**

ACTORUM AG

## Beschreibung

Die Erfindung betrifft einen Randstreifenmäher zum Anbringen an einem mit einer Zapfwelle versehenen Fahrzeug mit einem wahlweise auf gegenüberliegenden Seiten einer Längsmittelebene anbringbaren Mähkopf, enthaltend

(a) einen sich im wesentlichen in der besagten Längsmittelebene erstreckenden Träger,
(b) einen an dem Träger angelenkten Schwenkarm, und
(c) einen an dem freien Ende des Schwenkarms sitzenden Mähkopf.

Randstreifenmäher dienen dazu, die Randstreifen von Fernstraßen zu mähen. Sie werden an einem Trägerfahrzeug angebracht, wobei der Träger des Randstreifenmähers sich im wesentlich in Fahrtrichtung erstreckt. An diesem Träger ist ein Schwenkarm mit einem Mähkopf angelenkt. Der Schwenkarm ist durch einen hydraulischen Hubmotor aus- und einschwenkbar. Das Einschwenken erfolgt einmal während der Fahrt zum oder vom Einsatzort. Außerdem muß der Schwenkarm mit dem Mähkopf eingeschwenkt werden, wenn sich auf dem Randstreifen Hindernisse wie Leitpfosten oder Bäume befinden. Zu diesem Zweck sind an dem Mähkopf Fuhler angebracht, die beim Auftreffen auf ein Hindernis den Hubmotor so ansteuern, daß der Schwenkarm mit dem Mähkopf einwärtsgeschwenkt wird und an dem Hindernis vorbeigehen kann. Nach Passieren des Hindernisses wird der Hubmotor von dem Fühler so gesteuert, daß der Schwenkarm mit dem Mähkopf wieder nach außen geschwenkt wird. Zur Anpassung an Bodenunebenheiten oder Böschungen ist eine Schwenkbewegung des Trägers um eine Querachse bzw. eine Schwenkbewegung des Mähkopfes gegenüber dem Träger um eine waagerechte, im wesentlichen in Längsrichtung verlaufende Achse möglich (DE-OS 31 16 984).

Bei üblichen Straßen wird der Randstreifenmäher so benutzt, daß der Schwenkarm mit dem Mähkopf sich auf der in Fahrtrichtung rechten Seite der Längsmittelebene befindet, so daß ein Randstreifen rechts von der Straße gemäht wird. Zum Mähen beispielsweise des Mittelstreifens von Autobahnen ist es jedoch erforderlich, den Schwenkarm mit dem Mähkopf wahlweise auch links von der Längsmittelebene zu verwenden. Ein Randstreifenmäher, der dies gestattet, ist bekannt durch die DE-OS 33 33 307. Dieser Randstreifenmäher weist an einem Gehäuse symmetrisch auf beiden Seiten Augen auf, an denen wahlweise ein den Mähkopf tragender Tragrahmen rechts und eine teleskopartige Schiebestange links angelenkt werden kann oder umgekehrt. Dadurch kann der Mähkopf wahlweise vor oder hinter dem Fahrzeug angeordnet und wahlweise rechts oder links von diesem geführt werden. Die bekannte Anordnung erfordert erheblichen Arbeitsaufwand, wenn der Mähkopf von der Betriebsweise rechts von der Längsmittelebene auf die Betriebsweise links von der Längsmittelebene umgebaut werden soll. Es ist dann erforderlich, den Tragarm mit dem Mähkopf von dem Gehäuse zu lösen und auf der entgegengesetzten Seite an dem Gehäuse anzulenken. Der von dem Gehäuse gelöste Tragarm und Mähkopf muß dabei von Hand umgesetzt und wieder an dem Gehäuse montiert werden.

Der Erfindung liegt die Aufgabe zugrunde, einen Randstreifenmäher der eingangs genannten Art so auszubilden, daß ein Umbau von "Rechtsbetrieb" auf "Linksbetrieb" mit geringem Aufwand ohne Demontage des Schwenkarmes und Mähkopfes durchgeführt werden kann.

Erfindungsgemäß wird diese Aufgabe durch gelöst, daß

(d) Getriebemittel im wesentlichen in der Längsmittelebene auf dem Träger angeordnet und einerseits durch sich längs des Trägers erstreckende Übertragungsmittel mit einer Antriebskraftmaschine und andererseits über sich längs des Schwenkarmes erstreckende Übertragungsmittel mit dem Mähkopf in Antriebsverbindung sind und
(e) der Schwenkarm mit dem Mähkopf unter dem Träger hindurchschwenkbar ist.

Der Träger des Randstreifenmähers ist dabei im wesentlichen symmetrisch zur Längsmittelebene und enthält ein Getriebe auf dieser Längsmittelebene. Die Kraftübertragung von der Antriebskraftmaschine erfolgt in Längsrichtung des Tragarmes auf das Getriebe und dann von dem Getriebe über den Schwenkarm auf den Mähkopf. Diese Kraftübertragung kann in gleicher Weise erfolgen, ob der Mähkopf nun recht oder links von dem Träger angeordnet ist. Ein Wechsel von Rechtsbetrieb auf Linksbetrieb erfolgt dadurch, daß der Schwenkarm mit dem Mähkopf unter dem Träger hindurchgeschwenkt wird.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 zeigt eine Draufsicht eines Randstreifenmähers.
Fig. 2 zeigt eine Einzelheit der Anordnung von Fig. 1 in vergrößertem Maßstab.

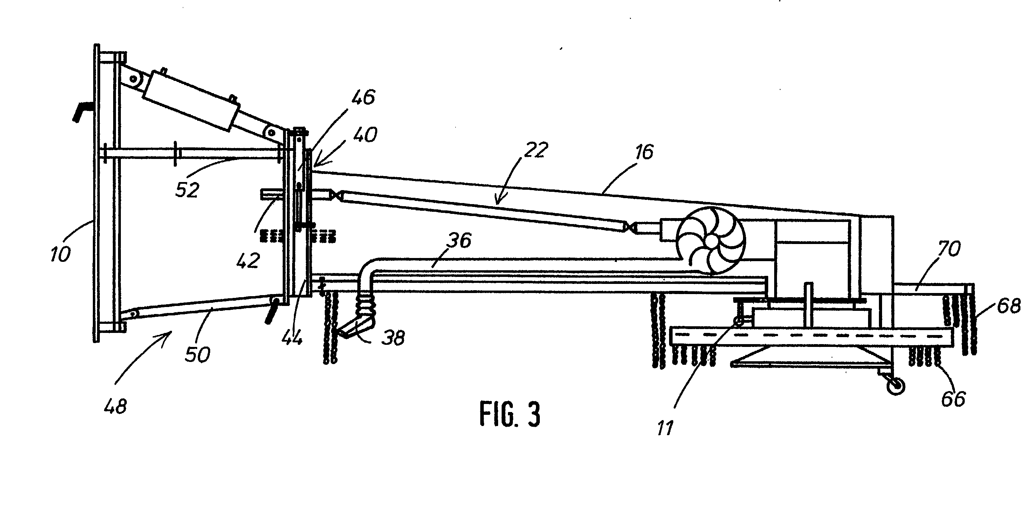

Fig. 3 zeigt eine Seitenansicht des Randstreifenmähers.

Der Randstreifenmäher ist mittels einer Geräteplatte 10 an einem mit einer Zapfenwelle versehenen (nicht dargestellten) Fahrzeug anbringbar. Der Randstreifenmäher enthält einen Mähkopf 12, der in noch zu beschreibender Weise wahlweise auf gegen überliegenden Seiten einer Längsmittelebene 14 angebracht werden kann. Der Randstreifenmäher enthält einen sich im wesentlichen in der besagten Längsmittelebene 14 erstreckenden Träger 16. An dem Träger 16 ist ein Schwenkarm 18 angelenkt. An dem freien Ende des Schwenkarmes sitzt der Mähkopf 12.

Getriebemittel 20 sind im wesentlichen in der Längsmittelebene 14 auf dem Träger 16 angeordnet und einerseits durch sich längs des Trägers 16 erstreckende Übertragungsmittel 22 mit einer Antriebskraftmaschine und andererseits über sich längs des Schwenkarmes 12 erstreckende Übertragungsmittel etwa in Form eines (nicht dargestellten) Riementriebs mit dem Mähkopf 12 in Antriebsverbindung. Der Schwenkarm 18 mit dem Mähkopf 12 ist unter dem Träger 16 hindurchschwenkbar.

Die Getriebemittel 20 enthalten ein Getriebe 24 mit einer sich im wesentlichen in Längsrichtung des Trägers 16 erstreckenden Eingangswelle 26 und einer senkrecht dazu sich erstreckenden, im wesentlichen vertikalen Ausgangswelle 28. Der Schwenkarm 18 ist um die Achse der Augangswelle 28 verschwenkbar. Infolgedessen ändert sich die Lage der Übertragungsmittel zwischen Getriebe 24 und Mähkopf 12 bei einer Verschwenkung des Schwenkarms 18 nicht.

Ein Getriebegehäuse 30 des besagten Getriebes 24 ist zur Aufnahme eines Ölvolumens ausgebildet und bildet zugleich den Behälter eines (nicht dargestellten) Hydrauliksystems. Eine (ebenfalls nicht dargestellte) Hydraulikpumpe und Steuerventile des Hydrauliksystems sind in dem Getriebegehäuse 30 angeordnet.

In die Übertragungsmittel 22 zwischen Antriebskraftmaschine und Getriebe 24 ist ein T-Trieb 32 mit einer zur Eingangswelle 26 des Getriebes 24 senkrechten zusätzlichen Ausgangswelle eingeschaltet. Die zusätzliche Ausgangswelle ist mit einem am dem Träger 16 angeordneten Gebläse 34 gekuppelt. Das Gebläse ist über eine sich längs des Trägers 16 erstreckende Gebläseleitung 36 mit einem unterhalb des Trägers 16 angebrachten Blasrohr 38 verbunden. Das Blasrohr 38 ist wahlweise nach der einen oder der anderen Seite der Längsmittelebene 14 verschwenkbar.

Der Träger 16 ist von einem langgestreckten Hohlkörper gebildet, in dessen Innerem das Getriebe 24 mit seinem Gehäuse 30, das Gebläse 34 mit der Gebläseleitung 36 und die Übertragungsmittel 22 zwischen Antriebskraftmaschine und Getriebe 24 angeordnet sind. In einer fahrzeugseitigen Stirnwand 40 des Trägers 16 ist in einem Lager ein Anschlußwellenstück 42 gelagert, das mit der Zapfwelle eines Trägerfahrzeugs kuppelbar und so von dessen Antriebskraftmaschine antreibbar ist. Das Anschlußwellenstück 42 ist mit dem Getriebe über die von einer Gelenkwelle gebildeten Übertragungsmittel 22 verbunden. Das Lager des Anschlußwellenstücks 42 ist zur Anpassung an die unterschiedlichen Lagen der Zapfwellen in verschiedenen Trägerfahrzeugen in der Stirnwand 40 verstellbar gehalten. Die fahrzeugseitige Stirnwand 40 des Trägers 16 ist von einem Drehkranz 44 gebildet, der durch einen hydraulischen Stellmotor 46 um die Längsachse des Trägers 16 verdrehbar ist.

An der Geräteplatte 10, die an einem Trägerfahrzeug befestigbar ist, ist der Träger 16 über ein in vertikaler Richtung verschwenkbares Dreipunktgestänge 48,50,52,54 gelagert. Der Träger 16 ist mit wenigstens einem der Lenker 52 über eine lösbare Kupplung 56 starr verbindbar. Wie aus Fig.2 ersichtlich ist, ist die Kupplung 56 eine Zahnkupplung. Zwischen Geräteplatte 10 und Träger 16 ist ein Hubmotor 58 vorgesehen.

Zwischen dem Träger 16 und dem Schwenkarm 18 ist ein hydraulischer Hubmotor 60 vorgesehen, durch welchen der Schwenkarm 18 ein und ausschwenkbar ist. Der hydraulische Hubmotor 60 ist an dem Schwenkarm 18 wahlweise auf einer oder der anderen Seite desselben lösbar anlenkbar und gegenüber dem Träger 16 von einer Seite der Längsmittelebene 14 zur anderen verschwenkbar. Dadurch kann nach Lösen des Hubmotors 60 von dem Schwenkarm 18 der Schwenkarm 18 mit dem Mähkopf 12 zur anderen Seite der Längsmittelebene verschwenkt und danach der Hubmotor wieder an den Schwenkarm angelenkt werden.

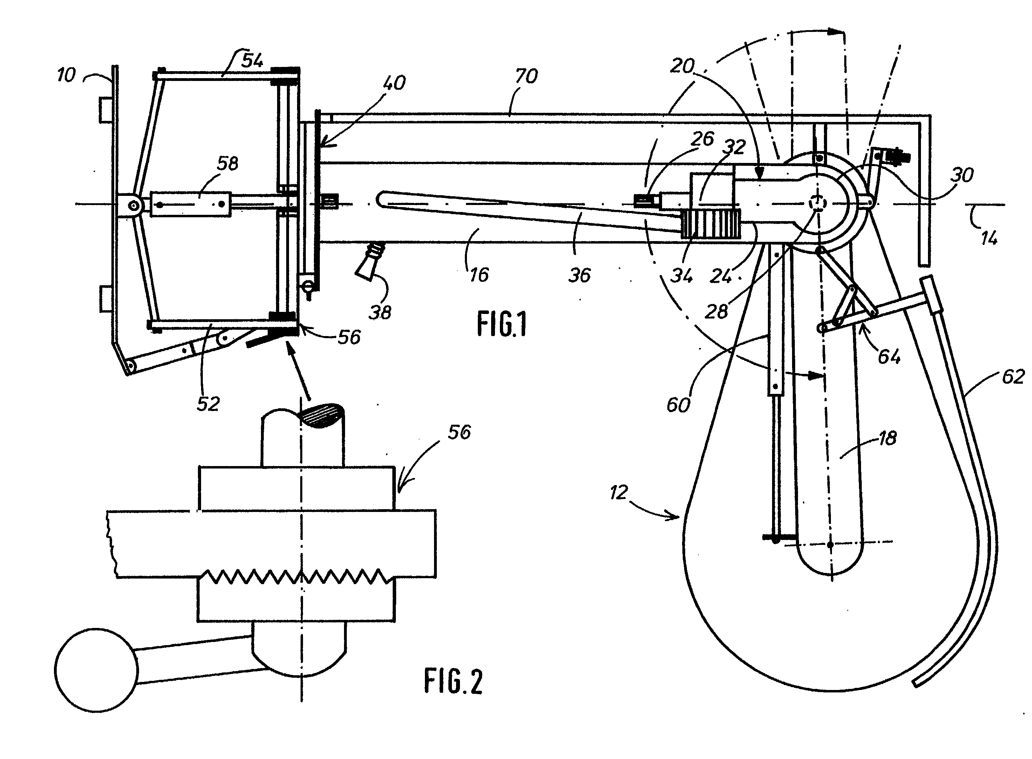

Wie aus Fig.1 ersichtlich ist, sitzt an dem Schwenkarm 18 ein Fühler 62, der sich im Abstand vor dem Mähkopf 12 erstreckt. Dieser Fühler 62 betätigt, wenn er auf ein Hindernis trifft, über ein Hebelsystem 64 ein Steuerventil, welches eine Verschwenkung des Schwenkarmes 18 einwärts gegen den Träger 16 bewirkt. Der Mähkopf 12 weicht dadurch Hindernissen wie Leitpfosten oder Bäumen aus. Nach Wegfall des Hindernisses gibt der Fühler 62 wieder die Schwenkbewegung in die Arbeitslage frei.

Der Mähkopf 12 ist von einem Kettenvorhang 66 umgeben. Ein ähnlicher Kettenvorhang 68 hängt an einem Rahmen 70, der sich auf der dem Mähkopf 12 abgewandten Seite längs des Trägers 16 erstreckt. Solche Kettenvorhänge haben den Zweck, das Herausschleudern von Steinen od.dergl. durch den Mähkopf 12 auf die Straße zu verhindern.

Wenn der Mähkopf 12 statt, wie in Fig.1 dargestellt, auf der in Fahrtrichtung rechten Seite im "Linksbetrieb" auf der gegenüberliegenden Seite der Längsmittelebene 14 angewandt werden soll, wird der Hubmotor 60 von dem Schwenkarm 18 gelöst. Ferner werden der Rahmen 70 mit dem Kettenvorhang 68 sowie der Fühler 62 mit dem Gestänge 64 gelöst. Der Träger 16 wird durch den Hubmotor 58 hydraulisch angehoben. Es kann dann der Schwenkarm 18 mit dem Mähkopf 12 unter dem Träger 16 in die gestrichelt dargestellte Stellung verschwenkt werden, wie durch den mit Doppelpfeil versehenen Kreisbogen angedeutet ist. Der Hubmotor 60 wird um im wesentlichen 180° verschwenkt und auf der jetzt entgegengesetzten Seite an dem Schwenkarm 18, d.h. links in Fig.1, angelenkt. In entsprechender Weise wird der Fühler 62 um 180° versetzt montiert. Das gleiche gilt für den Rahmen 70. Der Träger 16 wird dann abgesenkt und das Gerät ist für "Linksbetrieb" betriebsbereit. Dies kann von einem einzigen Bedienungsmann durchgeführt werden, ohne daß dieser übermäßige Körperkräfte auszuüben braucht.

Das beschriebene Gerät gestattet auch eine Justierung des Trägers 16 relativ zu dem Dreipunktgestänge 48. Zu diesem Zweck wird die Kupplung 56 gelöst. Es kann dann mittels des Hubmotors 58 die Lage des Trägers 16 relativ zu der Geräteplatte 10 eingestellt und dann der Träger 16 wieder mit den Lenkern 52 und 54 gekuppelt werden.

## Patentansprüche

1. Randstreifenmäher zum Anbringen an einem mit einer Zapfwelle versehenen Fahrzeug mit einem wahlweise auf gegenüberliegenden Seiten einer Längsmittelebene anbringbaren Mähkopf (12), enthaltend

(a) einen sich im wesentlichen in der besagten Längsmittelebene (14) erstreckenden Träger (16),

(b) einen an dem Träger (16) angelenkten Schwenkarm (18), und

(c) einen an dem freien Ende des Schwenkarmes (18) sitzenden Mähkopf (12), dadurch gekennzeichnet, daß

(d) Getriebemittel (20) im wesentlichen in der Längsmittelebene (14) auf dem Träger (16) angeordnet und einerseits durch sich längs des Trägers (16) erstreckende Übertragungsmittel (22) mit einer Antriebskraftmaschine und andererseits über sich längs des Schwenkarmes (18) erstreckende Übertragungsmittel mit dem Mähkopf (12) in Antriebsverbindung sind und

(e) der Schwenkarm (18) mit dem Mähkopf (12) unter dem Träger (16) hindurchschwenkbar ist.

2. Randstreifenmäher nach Anspruch 1, dadurch gekennzeichnet, daß

(a) die Getriebemittel (20) ein Getriebe (24) mit einer sich im wesentlichen in Längsrichtung des Trägers (16) erstreckenden Eingangswelle (26) und einer senkrecht dazu sich erstreckenden, im wesentlichen vertikalen Ausgangswelle (28) enthalten und

(b) der Schwenkarm (18) um die Achse der Ausgangswelle (28) verschwenkbar ist.

3. Randstreifenmäher nach Anspruch 2, dadurch gekennzeichnet, daß ein Getriebegehäuse (30) des besagten Getriebes (24) zur Aufnahme eines Ölvolumens ausgebildet ist und zugleich den Behälter eines Hydrauliksystems bildet.

4. Randstreifenmäher nach Anspruch 3, dadurch gekennzeichnet, daß eine Hydraulikpumpe und Steuerventile des Hydrauliksystems in dem Getriebegehäuse (30) angeordnet sind.

5. Randstreifenmäher nach Anspruch 2, dadurch gekennzeichnet, daß

(a) in die Übertragungsmittel (22) zwischen Antriebskraftmaschine und Getriebe (24) ein T-Trieb (32) mit einer zur Eingangs welle (26) des Getriebes (24) senkrechten zusätzlichen Ausgangswelle eingeschaltet ist und

(b) die zusätzliche Ausgangswelle mit einem an dem Träger angeordneten Gebläse (34) gekuppelt ist.

6. Randstreifenmäher nach Anspruch 5, dadurch gekennzeichnet, daß

(a) das Gebläse (34) über eine sich längs des Trägers (16) erstreckende Gebläseleitung (36) mit einem unterhalb des Trägers (16) angebrachten Blasrohr (38) verbunden ist,

(b) das Blasrohr (38) wahlweise nach der einen oder der anderen Seite der Längsmittelebene (14) verschwenkbar ist.

7. Randstreifenmäher nach Anspruch 1, dadurch gekennzeichnet, daß der Träger (16) von einem langgestreckten Hohlkörper gebildet ist, in dessen Innerem das Getriebe (24) mit seinem Gehäuse (30), das Gebläse (34) mit der Gebläseleitung (36) und die Übertragungsmittel (22) zwischen Antriesbkraftmaschine und Getriebe (24) angeordnet sind.

8. Randstreifenmäher nach Anspruch 7, dadurch gekennzeichnet, daß

(a) in einer fahrzeugseitigen Stirnwand (40) des Trägers (16) in einem Lager ein Anschlußwellenstück (42) gelagert ist, das mit einer Zapfwelle eines Trägerfahrzeugs kuppelbar und so von dessen Antriebskraftmaschine antreibbar ist,

(b) das Anschlußwellenstück (42) mit dem Getriebe (24) über die von einer Gelenkwelle gebildeten Übertragungsmittel (22) verbunden ist und

(c) das Lager des Anschlußwellenstücks (42) zur Anpassung an die unterschiedlichen Lagen der Zapfwellen in verschiedenen Trägerfahrzeugen in der Stirnwand (40) verstellbar gehaltert ist.

9. Randstreifenmäher nach Anspruch 7 oder 8, dadurch gekennzeichnet, daß die fahrzeugseitige Stirnwand (40) des Trägers von einem Drehkranz (44) gebildet ist, der durch einen hydraulischen Stellmotor (46) um die Längsachse des Trägers (16) verdrehbar ist.

10. Randstreifenmäher nach Anspruch 1, dadurch gekennzeichnet, daß

(a) an einer Geräteplatte (10), die an einem Trägerfahrzeug befestigbar ist, der Träger (16) über ein in vertikaler Richtung verschwenkbares Dreipunktgestänge (48) mit drei Lenkern (50,52,54) gelagert ist,

(b) der Träger (16) mit wenigstens einem der Lenker (52) über eine lösbare Kupplung (56) starr verbindbar ist und

(c) ein Hubmotor (58) zwischen Geräteplatte (10) und Träger (16) vorgesehen ist.

11. Randstreifenmäher nach Anspruch 10, dadurch gekennzeichnet, daß die Kupplung (56) eine Zahnkupplung ist.

12. Randstreifenmäher nach Anspruch 1, dadurch gekennzeichnet, daß

(a) zwischen dem Träger (16) und dem Schwenkarm (18) ein hydraulischer Hubmotor (60) vorgesehen ist, durch welchen der Schwenkarm (18) ein- und ausschwenkbar ist, und

(b) der hydraulische Hubmotor (60) an dem Schwenkarm (18) wahlweise auf einer oder der anderen Seite desselben lösbar anlenkbar und gegenüber dem Träger (16) von einer Seite der Längsmittelebene (14) zur anderen verschwenkbar ist, so daß nach Lösen des Hubmotors (60) von dem Schwenkarm (18) der Schwenkarm (18) mit dem Mähkopf (12) zur anderen Seite der Längsmittelebene (14) verschwenkt und danach der Hubmotor (60) wieder an den Schwenkarm (18) angelenkt werden kann.

**Claims**

1. Verge mower for mounting on a vehicle provided with a power take-off shaft and having a mower head (12) optionally mountable on opposite sides of a longitudinal center plane, comprising

(a) a support (16) extending substantially in said longitudinal center plane (14),

(b) a pivot arm (18) pivoted on the support (16), and

(c) a mower head (12) located at the free end of the pivot arm (18), characterized in that

(d) gearing means (20) are arranged on the support (16) substantially in the longitudinal center plane (14) and are in driving engagement with a prime mover, on one hand, through transmission means (22) extending along the support (16) and, on the other hand, the mower head (12) through transmission means extending along the pivot arm (18), and

(e) the pivot arm (18) with the mower head (12) is pivotable under the support (16).

2. Verge mower as set forth in claim 1, characterized in that

(a) the gearing means (20) comprise a gearing (24) having an input shaft (26) extending substantially in the longitudinal direction of the support (16) and a substantially vertical output shaft (28) extending perpendicular thereto, and

(b) the pivot arm (18) is pivotable about the axis of the output shaft (28).

3. Verge mower as set forth in claim 2, characterized in that a gearing housing (30) of said gearing (24) is adapted to accommodate an oil volume and forms at the same time the vessel of a hydraulic system.

4. Verge mower as set forth in claim 3, characterized in that a hydraulic pump and control valves of the hydraulic system are arranged in the gearing housing (30).

5. Verge mower as set forth in claim 2, characterized in that

(a) a T-pinion (32) having an additional output shaft perpendicular to the input shaft (26) of the gearing (24) is connected into the transmission means (22) between prime mover and gearing (24), and

(b) the additional output shaft is coupled to a fan (34) arranged at the support.

6. Verge mower as set forth in claim 5, characterized in that

(a) the fan (34) is connected to a blow tube (38) mounted below the support (16) through a fan conduit (36) extending along the support (16),

(b) the blow tube (38) is optionally pivotable to one or the other side of the longitudinal center plane (14).

7. Verge mower as set forth in claim 1, characterized in that the support (16) is formed by an elongated hollow body, in the interior of which the gearing (24) with its housing (30), the fan (34) with the fan conduit (36) and the transmission means (22) between prime mover and gearing (24) are arranged.

8. Verge mower as set forth in claim 7, characterized in that

(a) a connecting shaft piece (42) is mounted in a bearing in a front wall (40) of the support (16) on the vehicle side, which connecting shaft piece (42) is adapted to be coupled to a power take-off shaft of a supporting vehicle and thus to be driven by the prime mover thereof,

(b) the connecting shaft piece (42) is connected to the gearing (24) through the transmission means (22) formed by a cardan shaft, and

(c) the bearing of the connecting shaft piece (42) is held displaceably in the front wall (40) for adaption to the different positions of the power take-off shafts in different supporting vehicles.

9. Verge mower as set forth in claims 7 or 8, characterized in that the front wall (40) of the support on the vehicle side is formed by a live ring (44) which is rotatable by a hydraulic servomotor (46) about the longitudinal axis of the support (16).

10. Verge mower as set forth in claim 1, characterized in that

(a) the support (16) is mounted through a three point link system (48) having three links (50, 52, 54) and pivotable in a vertical direction at a device plate (10) which is attached to a supporting vehicle,

(b) the support (16) is adapted to be rigidly connected to at least one of the links (52) through a releasable clutch (56), and

(c) a hoisting motor (58) is provided between device plate (10) and support (16).

11. Verge mower as set forth in claim 10, characterized in that the clutch (56) is a denture clutch.

12. Verge mower as set forth in claim 1, characterized in that

(a) a hydraulic hoisting motor (60) adapted to pivot the pivot arm (18) inwards and outwards is provided between the support (16) and the pivot arm (18), and

(b) the hydraulic hoisting motor (60) is releasably pivotable at the pivot arm (18) optionally on one or the other side thereof and pivotable relative to the support (16) from one side of the longitudinal center plane (14) to the other such that the pivot arm (18) with mower head (12) can be pivoted to the other side of the longitudinal center plane (14) after the hoisting motor (60) has been released from the pivot arm (18), and, subsequently, the hoisting motor (60) can be pivoted on the pivot arm (18) again.

**Revendications**

1. Tondeuse d'accotement à monter sur un véhicule muni d'une prise de force et ayant une tête tondeuse (12) facultativement montable sur les côtés opposés d'un plan médian longitudinal, comprenant

(a) un support (16) s'étendant essentiellement dans ledit plan médian longitudinal (14),

(b) un bras de pivotement (18) articulé au support (18), et

(c) une tête tondeuse (12) située à l'extrémité libre du bras de pivotement (18), caractérisée par le fait que

(d) des moyens d'engrenage (20) sont disposés sur le support (16) essentiellement dans le plan médian longitudinal (14) et sont en connexion d'entraînement d'un côté avec un moteur d'entraînement par des moyens de transmission (22) s'étendant le long du support (16), et d'autre côté avec la tête tondeuse (12) par des moyens de transmission s'étendant le long du bras de pivotement (18), et

(e) le bras de pivotement (18) avec la tête tondeuse (12) est pivotable sous le support (16).

2. Tondeuse d'accotement selon la revendication 1, caractérisée par le fait que

(a) les moyens d'engrenage (20) comprennent un engrenage (24) avec un arbre d'entrée (26) s'étendant essentiellement en direction longitudinale du support (16) et un arbre de sortie (28) essentiellement vertical et s'étendant perpendiculairement à celui-ci, et

(b) le bras de pivotement (18) est pivotable autour de l'axe de l'arbre de sortie (28).

3. Tondeuse d'accotement selon la revendication 2, caractérisée par le fait qu'un boîtier d'engrenage (30) dudit engrenage (24) est adapté à recevoir un volume d'huile et forme simultanément le récipient d'un système hydraulique.

4. Tondeuse d'accotement selon la revendication 3, caractérisée par le fait qu'une pompe hydraulique et des soupapes de commande du système hydraulique sont disposées dans le boîtier d'engrenage (30).

5. Tondeuse d'accotement selon la revendication 2, caractérisée par le fait que

(a) un pignon T (32) muni d'un arbre de sortie supplémentaire perpendiculaire à l'arbre d'entrée (26) de l'engrenage (24) est connecté dans les moyens de transmission (22) entre le moteur d'entraînement et l'engrenage (24), et

(b) l'arbre de sortie supplémentaire est couplé à un ventilateur (34) disposé sur le support.

6. Tondeuse d'accotement selon la revendication 5, caractérisée par le fait que

(a) le ventilateur (34) est relié à un tuyau à vent (38) monté sous le support (16) par une conduite de ventilateur (36) s'étendant le long du support (16),

(b) le tuyau à vent (38) est facultativement pivotable vers l'un ou l'autre côté du plan médian longitudinal (14).

7. Tondeuse d'accotement selon la revendication 1, caractérisée par le fait que le support (16) est formé par un corps creux allongé dans l'intérieur duquel sont disposés l'engrenage (24) avec son boîtier (30), le ventilateur (34) avec la conduite de ventilateur (36) et les moyens de transmission (22) entre le moteur d'entraînement et l'engrenage (24).

8. Tondeuse d'accotement selon la revendication 7, caractérisée par le fait que

(a) un élément d'arbre de raccord (42) est monté dans un palier dans une paroi frontale (40) du support (16) du côté du véhicule, et pouvant être accouplé à une prise de force d'un véhicule de support et ainsi actionnable par le moteur d'entraînement de celui-ci,

(b) l'élément d'arbre de raccord (42) est relié à l'engrenage (24) par les moyens de transmission (22) formés par un arbre de transmission, et

(c) le palier de l'élément d'arbre de raccord (42) et tenu de manière amovible dans la paroi frontale (40) afin de l'adapter aux positions différentes des prises de force dans des véhicules de support différents.

9. Tondeuse d'accotement selon la revendication 7 ou 8, caractérisée par le fait que la paroi frontale (40) du côté du véhicule est formée par une couronne de pivotement (44) rotative par un servomoteur hydraulique (46) autour de l'axe longitudinal du support (16).

10. Tondeuse d'accotement selon la revendication 1, caractérisée par le fait que

(a) le support (16) est monté par un système de tiges à trois points (48) muni de trois bielles (50, 52, 54) et pivotable dans la direction verticale, à une plaque d'appareil (10) attachée à un véhicule de support,

(b) le support (16) est rigidement reliable à au moins l'une des bielles (52) par un embrayage résoluble (56), et

(c) un moteur de levage (58) est prévu entre la plaque d'appareil (10) et le support (16).

11. Tondeuse d'accotement selon la revendication 10, caractérisée par le fait que l'embrayage (56) est un embrayage à dents.

12. Tondeuse d'accotement selon la revendication 1, caractérisée par le fait que

(a) un moteur de levage hydraulique (60) par lequel le bras de pivotement (18) est pivotable vers l'intérieur et vers l'extérieur, est prévu entre le support (16) et le bras de pivotement (18), et

(b) le moteur de levage hydraulique (60) est articulé de manière resoluble au bras de pivotement (18) facultativement de l'un ou de l'autre côté de celui-ci, et est pivotable relativement au support (16) d'un côté du plan médian longitudinal (14) à l'autre côté du sorte que le bras de pivotement (18) avec la tête tondeuse (12) peut être pivoté vers l'autre côté du plan médian longitudinal (14) après resolution du moteur de levage (60) du bras de pivotement (18), et ensuite le moteur de lavage (60) peut de nouveau être articulé au bras de pivotement (18).

FIG.1

FIG.2

EP 0 230 592 B1

FIG. 3

EP 0 230 592 B1